(19) **Europäisches Patentamt**
**European Patent Office**
**Office européen des brevets**

(11) **EP 4 334 786 B1**

(12) **EUROPÄISCHE PATENTSCHRIFT**

(45) Veröffentlichungstag und Bekanntmachung des Hinweises auf die Patenterteilung:
**22.04.2026   Patentblatt 2026/17**

(21) Anmeldenummer: **22727783.7**

(22) Anmeldetag: **03.05.2022**

(51) Internationale Patentklassifikation (IPC):
***G05B 13/04*** *(2006.01)*

(52) Gemeinsame Patentklassifikation (CPC):
**G05B 13/04**

(86) Internationale Anmeldenummer:
**PCT/EP2022/061793**

(87) Internationale Veröffentlichungsnummer:
**WO 2022/233834 (10.11.2022 Gazette 2022/45)**

(54) **VERFAHREN ZUM BETREIBEN EINES HYDRAULISCHEN ZYLINDERS EINER ARBEITSMASCHINE**

METHOD FOR OPERATING A HYDRAULIC CYLINDER OF A WORK MACHINE

PROCÉDÉ POUR FAIRE FONCTIONNER UN VÉRIN HYDRAULIQUE D'UNE MACHINE DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **05.05.2021   DE 102021204544**

(43) Veröffentlichungstag der Anmeldung:
**13.03.2024   Patentblatt 2024/11**

(73) Patentinhaber: **Robert Bosch GmbH**
**70442 Stuttgart (DE)**

(72) Erfinder:
• **TRACHTE, Adrian**
**70563 Stuttgart (DE)**
• **DEMIR, Ozan**
**73765 Neuhausen (DE)**
• **NEYER, Daniel**
**70195 Stuttgart (DE)**
• **STEKER, Nils**
**74321 Bietigheim-Bissingen (DE)**
• **BENDER, Frank**
**70190 Stuttgart (DE)**
• **GRIESER, Armin**
**89073 Ulm (DE)**
• **EHLERS, Benjamin**
**89284 Pfaffenhofen (DE)**

(56) Entgegenhaltungen:
DE-A1- 102017 213 650     US-A1- 2020 097 851
US-A1- 2020 123 927     US-A1- 2020 191 136

## Beschreibung

Stand der Technik

Die Erfindung betrifft ein Verfahren und eine Steuereinheit zum Betreiben eines hydraulischen Zylinders sowie ein Verfahren und eine Steuereinheit zum Betreiben einer mittels eines hydraulischen Zylinders betreibbaren Arbeitseinheit einer, insbesondere mobilen, Arbeitsmaschine. Gegenstand der vorliegenden Erfindung sind auch eine Arbeitsmaschine, ein Computerprogramm und ein computerlesbarer Datenträger.

Moderne Arbeitsmaschinen ermöglichen zunehmend das Ausführen von automatisierten oder teilautomatisierten Arbeitsprozessen. Inhalt der Funktionalität ist dabei häufig das automatisierte Folgen einer gewünschten Trajektorie für den Tool Center Point (TCP) oder bei Assistenzfunktionen die Unterstützung des Fahrers beim Folgen einer gewünschten Trajektorie. Hierbei kommen bspw. datenbasierte Regelstrukturen zum Einsatz.

Da eine Druckdifferenz über einer Blende einer dem hydraulischen Zylinder zugeordneten Ventileinheit stark von einer auf die Arbeitseinheit wirkenden Last abhängt, ist der Datengenerierungsaufwand für eine vollständige Abdeckung des möglichen Arbeitsbereichs der Arbeitseinheit mit einem rein datenbasierten Modell sehr hoch. Insbesondere kann eine Generierung von Trainingsdaten bei unterschiedlichen Lasten erforderlich sein. US 2020/0123927 A1 offenbart ein Vefahren zur Steuerung eines Gasturbinenmotorsystems unter Verwendung einer adaptiven moellbasierten Regelung.

US 2020/0097851 A1 offenbart ein Verfahren zur Verarbeitung von digitalen landwirtschaftlichen Daten unter Verwendung eines maschinellen Lernmodells, um eine landwirtschaftliche Maschine zu steuern.

Offenbarung der Erfindung

Gemäß einem ersten Aspekt betrifft die vorliegende Erfindung ein Verfahren zum Betreiben eines hydraulischen Zylinders einer, insbesondere mobilen, Arbeitsmaschine.

Das Verfahren umfasst einen Schritt des Empfangens eines Sollwerts eines Bewegungsparameters des hydraulischen Zylinders mittels einer Steuereinheit.

Das Verfahren umfasst weiter einen Schritt des Ermittelns eines Sollwerts eines Ventilsteuerparameters einer dem hydraulischen Zylinder zugeordneten Ventileinheit in Abhängigkeit von dem empfangenen Sollwert des Bewegungsparameters mittels der Steuereinheit. Hierbei wird der Sollwert des Ventilsteuerparameters unter Verwendung eines physikalischen Modells und eines datenbasierten Modells, insbesondere eines künstlichen neuronalen Netzes, ermittelt.

Das Verfahren umfasst ferner einen Schritt des Ausgebens eines Signals in Abhängigkeit von dem ermittelten Sollwert des Ventilsteuerparameters mittels der Steuereinheit, insbesondere mittelbar oder unmittelbar an die Ventileinheit, um den hydraulischen Zylinder zu betreiben.

Gemäß einem zweiten Aspekt betrifft die vorliegende Erfindung ein Verfahren zum Betreiben einer mittels eines hydraulischen Zylinders betreibbaren Arbeitseinheit, insbesondere eines mittels eines hydraulischen Zylinders betreibbaren Anbaugeräts, einer, insbesondere mobilen, Arbeitsmaschine.

Das Verfahren umfasst einen Schritt des Empfangens einer Sollposition der Arbeitseinheit, insbesondere des Anbaugeräts, mittels einer Steuereinheit. Das Verfahren umfasst weiter einen Schritt des Ermittelns eines Sollwerts eines Bewegungsparameters des hydraulischen Zylinders in Abhängigkeit von der empfangenen Sollposition der Arbeitseinheit mittels der Steuereinheit.

Das Verfahren umfasst außerdem einen Schritt des Ermittelns eines Sollwerts eines Ventilsteuerparameters einer dem hydraulischen Zylinder zugeordneten Ventileinheit in Abhängigkeit von dem empfangenen Sollwert des Bewegungsparameters unter Verwendung eines physikalischen Modells und eines datenbasierten Modells mittels der Steuereinheit.

Das Verfahren umfasst ferner einen Schritt des Ausgebens eines Signals in Abhängigkeit von dem ermittelten Sollwert des Ventilsteuerparameters mittels der Steuereinheit, insbesondere mittelbar oder unmittelbar an die Ventileinheit, um mittels Betreiben des hydraulischen Zylinders die Arbeitseinheit, insbesondere das Anbaugerät, der, insbesondere mobilen, Arbeitsmaschine zu betreiben.

Gemäß einem dritten Aspekt betrifft die Erfindung eine Steuereinheit zum Betreiben eines hydraulischen Zylinders einer, insbesondere mobilen, Arbeitsmaschine. Die Steuereinheit ist eingerichtet, einen Sollwert eines Bewegungsparameters des hydraulischen Zylinders zu empfangen. Weiter ist die Steuereinheit eingerichtet, einen Sollwert eines Ventilsteuerparameters einer dem hydraulischen Zylinder zugeordneten Ventileinheit in Abhängigkeit von dem empfangenen Sollwert des Bewegungsparameters unter Verwendung eines physikalischen Modells und eines datenbasierten Modells zu ermitteln. Ferner ist die Steuereinheit eingerichtet, ein Signal in Abhängigkeit von dem ermittelten Sollwert des Ventilsteuerparameters, insbesondere mittelbar oder unmittelbar an die Ventileinheit, auszugeben, um den hydraulischen Zylinder zu betreiben.

Gemäß einem vierten Aspekt betrifft die Erfindung eine Steuereinheit zum Betreiben einer mittels eines hydraulischen Zylinders betreibbaren Arbeitseinheit, insbesondere eines Anbaugeräts, einer, insbesondere mobilen, Arbeitsmaschine.

Die Steuereinheit ist eingerichtet eine Sollposition der Arbeitseinheit, insbesondere des Anbaugeräts, zu empfangen. Die Steuereinheit ist auch eingerichtet, einen Sollwert eines Bewegungsparameters des hydraulischen Zylinders in Abhängigkeit von der empfangenen Sollposition der Arbeitseinheit zu ermitteln. Die Steuereinheit ist weiter eingerichtet, einen Sollwert eines Ventilsteuerparameters einer dem hydraulischen Zylinder zugeordneten Ventileinheit in Abhängigkeit von dem empfangenen Sollwert des Bewegungsparameters unter Verwendung eines physikalischen Modells und eines datenbasierten Modells zu ermitteln. Die Steuereinheit ist ferner eingerichtet, ein Signal in Abhängigkeit von dem ermittelten Sollwert des Ventilsteuerparameters auszugeben, um mittels Betreiben des hydraulischen Zylinders die Arbeitseinheit, insbesondere das Anbaugerät, der, insbesondere mobilen, Arbeitsmaschine zu betreiben.

Gemäß einem fünften Aspekt betrifft die Erfindung eine, insbesondere mobile, Arbeitsmaschine, mit einer Arbeitseinheit, insbesondere einem Anbaugerät, mindestens einem hydraulischen Zylinder zum Bewegen der Arbeitseinheit, insbesondere des Anbaugeräts, und einer vorstehend beschriebenen Steuereinheit zum Betreiben der Arbeitseinheit, insbesondere des Anbaugeräts.

Gemäß einem weiteren Aspekt betrifft die Erfindung ein Computerprogramm oder ein Computerprogrammprodukt, umfassend Befehle, die bei der Ausführung durch einen Computer oder eine Steuereinheit diesen bzw. diese veranlassen, das Verfahren nach dem ersten Aspekt der Erfindung und/oder das Verfahren nach dem zweiten Aspekt der Erfindung auszuführen und/oder zu steuern, sowie einen computerlesbaren Datenträger, auf dem das Computerprogramm gespeichert ist. Der computerlesbare bzw. maschinenlesbare Datenträger kann bspw. ein Speichermedium wie ein Halbleiterspeicher, ein Festplattenspeicher oder ein optischer Speicher sein.

Die Arbeitsmaschine kann eine stationäre oder bevorzugt eine mobile Arbeitsmaschine sein. Die Arbeitsmaschine kann eine Arbeitsmaschine für bauwirtschaftliche, landwirtschaftliche, forstwirtschaftliche oder logistische Zwecke sein. Die mobile Arbeitsmaschine kann bspw. ein Bagger, ein Radlader, eine Planierraupe, ein Flurförderzeug oder eine Hubarbeitsbühne sein. Die stationäre Arbeitsmaschine kann bspw. ein hydraulisch angetriebener Industrieroboter sein.

Die Arbeitseinheit der Arbeitsmaschine kann eine Arbeitseinheit zum Bearbeiten und/oder Behandeln einer landwirtschaftlichen und/oder forstwirtschaftlichen und/oder bauwirtschaftlichen Fläche sein und/oder zum Transportieren einer Last sein. Die Arbeitseinheit kann ein Anbaugerät sein. Denkbar ist auch, dass das Arbeitswerkzeug einen Arbeitsarm, ein Hubrahmen oder ein Hubgerüst umfasst.

Das Anbaugerät kann bspw. ein Löffel, eine Schaufel oder ein Arbeitskorb sein.

Das Anbaugerät kann an einem Arbeitsarm, einem Hubrahmen oder einem Hubgerüst der Arbeitsmaschine angeordnet sein.

Der hydraulische Zylinder bzw. der Hydraulikzylinder ist ausgebildet, eine Relativbewegung zwischen der Arbeitseinheit oder dem Anbaugerät sowie einer Maschinenhaupteinheit der Arbeitsmaschine zu erzeugen. Die Maschinenhaupteinheit umfasst beispielsweise eine Bedienerkabine und/oder eine Antriebseinheit der Arbeitseinheit. Die Maschinenhaupteinheit kann beispielsweise ein Oberwagen eines Baggers oder ein Hinterwagen eines Radladers sein. Die Arbeitseinheit bzw. das Anbaugerät ist also mittels des hydraulischen Zylinders relativ zu der Maschinenhaupteinheit der Arbeitsmaschine bewegbar. Hierzu umfasst der hydraulische Zylinder ein Gehäuse und einen Kolben. Der Kolben ist mittels Druckbeaufschlagung eines hydraulischen Fluids, bevorzugt einer Hydraulikflüssigkeit, relativ zu dem Gehäuse bewegbar, insbesondere in das Gehäuse ein- und ausführbar.

Die dem hydraulischen Zylinder zugeordnete Ventileinheit ist ausgebildet, einen vorgegebenen und/oder vorgebbaren Durchfluss der Hydraulikflüssigkeit durch die Ventileinheit einzustellen und/oder die Hydraulikflüssigkeit mit einem vorgegebenen und/oder vorgebbaren Druck zu beaufschlagen. Die dem hydraulischen Zylinder zugeordnete Ventileinheit ist ausgebildet, eine Relativbewegung zwischen Kolben und Gehäuse des Hydraulikzylinders zu erzeugen.

Die Ventileinheit kann ein oder mehrere Ventile umfassen. Das Ventil kann als Magnetventil oder pneumatisch betätigbares Ventil bzw. Pneumatikventil ausgebildet sein. Die Ventileinheit kann ein, insbesondere elektromagnetisches Pilotventil und bevorzugt ein dem Pilotventil zugeordnetes, insbesondere pneumatisch betätigbares, Hauptventil umfassen.

Mittels Steuern der Ventileinheit basierend auf dem ausgegebenen Signal kann eine Relativbewegung zwischen Kolben und Gehäuse des Hydraulikzylinders gesteuert werden. Diese Relativbewegung kann basierend auf einer Anordnung des hydraulischen Zylinders an der Arbeitsmaschine eine Relativbewegung zwischen dem Anbaugerät und der Maschinenhaupteinheit der Arbeitsmaschine, insbesondere zwischen dem Anbaugerät und einem Arbeitsarm und/oder einem Hubrahmen der Arbeitsmaschine, erzeugen.

Unter Steuern kann im Rahmen der vorliegenden Erfindung ein Steuern im Sinne eines Erzeugens einer Ausgangsgröße basierend auf einer Eingangsgröße verstanden werden. Unter Steuern kann weiter und bevorzugt ein, ein Regeln umfassendes Steuern im Sinne eines fortlaufenden Ermittelns eines Istwerts einer zu regelnden Größe und eines fortlaufenden Vergleichens des Istwerts mit einem Sollwert der zu regelnden Größe verstanden werden.

Die Steuereinheit umfasst bevorzugt ein oder mehrere, insbesondere kaskadierte, Regler. Die Steuereinheit kann an der Arbeitsmaschine angeordnet sein. Alternativ kann die Steuereinheit abseits der Arbeitsmaschine angeordnet, bspw. in einem Server-Backend oder einem Cloud-Computing-System und mittels einer drahtlosen Kommunikationsverbindung mit der Arbeitsmaschine verbindbar sein.

Eine Sollposition der Arbeitseinheit kann eine räumliche Relativposition der Arbeitseinheit relativ zu der die Arbeitseinheit umfassenden Arbeitsmaschine oder eine räumliche Position in einem externen Referenzkoordinatensystem, bspw. einem globalen Satellitennavigationssystem oder einem Referenzkoordinatensystem einer positionserfassenden Sensoreinheit sein. Die Sollposition eines Anbaugeräts ist bevorzugt eine räumliche Position des Tool Center Points (TCP) des Anbaugeräts. Die Sollposition der Arbeitseinheit bzw. des Anbaugeräts kann bspw. für einen mittels der Arbeitsmaschine auszuführenden Arbeitsschritt eines Arbeitsprozesses vorgegeben werden. Die Sollposition des Anbaugeräts kann auch eine räumliche Orientierung des Anbaugeräts, bspw. relativ zu der Maschinenhaupteinheit der Arbeitsmaschine, umfassen.

Das Ermitteln des Sollwerts des Bewegungsparameters in Abhängigkeit von der Sollposition der Arbeitseinheit kann mittels einer softwarebasierten Trajektorienplanung für die Arbeitseinheit bzw. das Anbaugerät bzw. für die Arbeitsmaschine erfolgen. Das Ermitteln des Sollwerts des Bewegungsparameters kann unter Berücksichtigung zumindest eines Teils einer Kinematik der Arbeitsmaschine erfolgen.

Der Bewegungsparameter des hydraulischen Zylinders ist ein Parameter einer Bewegung des hydraulischen Zylinders. Die Bewegung des hydraulischen Zylinders ist bevorzugt eine Relativbewegung zwischen Kolben und Gehäuse des hydraulischen Zylinders. Die Bewegung des hydraulischen Zylinders kann eine gleichförmige oder, bevorzugt gleichmäßig, beschleunigte Bewegung sein.

Der Bewegungsparameter des hydraulischen Zylinders kann eine Geschwindigkeit und/oder eine Beschleunigung sein. Bevorzugt ist der Bewegungsparameter eine Relativgeschwindigkeit oder Relativbeschleunigung zwischen Kolben und Gehäuse des hydraulischen Zylinders. Der Bewegungsparameter kann einen Betrag und eine Richtung der Geschwindigkeit und/oder der Beschleunigung umfassen.

Unter einem Empfangen bzw. Ermitteln eines Sollwerts kann im Rahmen der vorliegenden Erfindung ein Empfangen bzw. Ermitteln von zumindest einem Sollwert verstanden werden. Hierbei ist der Sollwert ein vorgegebener und/oder vorgebbarer Wert und/oder zuvor ermittelter Wert. Bevorzugt umfasst das Empfangen bzw. Ermitteln des Sollwerts ein Empfangen bzw. Ermitteln einer Mehrzahl oder einer Menge von Sollwerten. Denkbar ist, dass die Mehrzahl bzw. Menge von Sollwerten eine zeitliche Abfolge von Sollwerten repräsentiert.

Der Sollwert des Bewegungsparameters ist entsprechend ein Wert oder ein zeitlicher Verlauf des Wertes des Bewegungsparameters, gemäß dem eine Bewegung des hydraulischen Zylinders erfolgen soll.

Der Ventilsteuerparameter der Ventileinheit kann ein Parameter einer oder mehrerer Ventile der Ventileinheit sein, basierend auf welchem das bzw. die Ventile der Ventileinheit gesteuert werden. Der Ventilsteuerparameter kann eine Ventilbestromung bzw. eine Stromstärke eines Magnetventils sein. Der Ventilsteuerparameter kann auch ein Druck sein, mittels dessen ein pneumatisch betätigbares Ventil betätigt wird. Der Ventilsteuerparameter kann ferner ein geometrischer und/oder fluidischer Ventilparameter, wie bspw. eine Öffnungsfläche einer Ventilblende eines Ventils, der Ventileinheit sein. Denkbar ist auch, dass der Ventilsteuerparameter eine Stellung eines Bedienelements, insbesondere eines Joysticks, der Arbeitsmaschine ist. Das Bedienelement kann als Mittel zum Steuern der Bewegung des hydraulischen Zylinders dienen. Die Stellung des Bedienelements der Arbeitsmaschine kann eine Position oder ein Z Zustand des Bedienelements sein. Abhängig von der Stellung bzw. der Position bzw. des Zustands des Bedienelements wird die dem hydraulischen Zylinder zugeordnete Ventileinheit gesteuert, um den hydraulischen Zylinder zu bewegen. Hierzu ist jeder Stellung des Bedienelements jeweils ein Steuersignal zum Steuern der Ventileinheit bzw. ein Zustand der Ventileinheit zugeordnet.

Vorteilhafterweise wird der Sollwert des Ventilsteuerparameters ferner in Abhängigkeit von, insbesondere einem Wert von, zumindest einem weiteren Parameter des hydraulischen Zylinders und/oder der Arbeitsmaschine ermittelt wird. Der weitere Parameter ist bevorzugt ein von dem Bewegungsparameter verschiedener Parameter. Der weitere Parameter kann auch einer zeitlichen Ableitung des Bewegungsparameters entsprechen. Der weitere Parameter kann ein Druck sein, bspw. ein Druck eines Hydraulikfluids des Hydraulikzylinders sein. Der weitere Parameter ist bevorzugt eine Druckdifferenz zwischen einem Druck an einer Kolbenseite des hydraulischen Zylinders und einem Druck an einer Stangenseite des hydraulischen Zylinders. Alternativ oder zusätzlich ist der weitere Parameter eine Differenz zwischen einem Lastdruck der Arbeitseinheit und einem von einer Pumpeneinheit zur Druckbeaufschlagung des Hydraulikfluids bereitgestellten Druck. Denkbar ist auch, dass der weitere Parameter eine Temperatur eines Hydraulikfluids des hydraulischen Zylinders ist. Denkbar ist weiter, dass der weitere Parameter eine Drehzahl eines Motors der Arbeitsmaschine ist.

Unter einem physikalischen Modell kann im Rahmen der vorliegenden Anmeldung ein mathematisches Modell bzw. ein mathematischer Algorithmus verstanden werden, das bzw. der ausgebildet ist, eine Eingabegröße unter Verwendung ein oder mehrerer physikalischer Gleichungen bzw. Funktionen auf eine Ausgabegröße abzubilden. Die ein oder mehreren physikalischen Gleichungen repräsentieren oder approximieren eine dem Zusammenhang zwischen Eingabegröße und Ausgabegröße zu Grunde liegende physikalische Gesetzmäßigkeit. Das physikalische Modell kann der Nomenklatur der Systemtheorie folgend auch als White Box Modell bezeichnet werden.

Das Ausgabesignal bzw. der Ausgabewert des physikalischen Modells können für eine Plausibilisierung des Verfahrens verwendet werden. Denkbar ist, dass für den Ausgabewert mit einem vorgegebenen oder vorgebbaren dynamischen oder konstanten Schwellenwert verglichen wird und abhängig von dem Vergleich ein Fehlermodus aktiviert wird. Denkbar ist weiter, dass bei aktiviertem Fehlermodus ein vereinfachtes Modell zur Durchführung des Verfahrens eingesetzt wird. Dadurch kann die Robustheit des Verfahrens verbessert werden.

Unter einem datenbasierten Modell kann im Rahmen der vorliegenden Erfindung ein mathematisches Modell bzw. ein mathematischer Algorithmus verstanden werden, das bzw. der ausgebildet ist, eine Eingabegröße unter Verwendung von Trainingsdaten auf eine Ausgabegröße abzubilden. Die Trainingsdaten repräsentieren eine Korrelation von Werten der Eingabegröße und Werten der Ausgabegröße. Das datenbasierte Modell ist bevorzugt als künstliches neuronales Netz ausgebildet. Das datenbasierte Modell kann der Nomenklatur der Systemtheorie folgend auch als Black Box Modell bezeichnet werden. Insbesondere kann das datenbasierte Anteil einen nichtlinearen Anteil des Modells, insbesondere einen signifikant von einer auf die Arbeitseinheit wirkenden Last abhängigen Anteil des Modells, repräsentieren.

Die Trainingsdaten können bei einem Betrieb des Hydraulikzylinders, bspw. bei einem Betrieb einer den Hydraulikzylinder umfassenden Arbeitsmaschine, ermittelt werden. Die Trainingsdaten entsprechen hierbei Wertekombinationen, die bei einem Betrieb des Hydraulikzylinders auftreten bzw. vorliegen.

Eine Kombination, insbesondere eine parallele oder sequentielle Verwendung, von datenbasiertem Modell und physikalischen Modell kann der Nomenklatur der Systemtheorie folgend auch als Grey Box Modell oder Hybridmodell bezeichnet werden.

Beim Ermitteln des Sollwerts des Ventilsteuerparameters können das datenbasierte Modell und das physikalische Modell zeitlich parallel oder zeitlich sequentiell verwendet werden. Das physikalische oder datenbasierte Modell können Teil einer Vorsteuerung eines zum Ermitteln des Sollwerts des Ventilsteuerparameters verwendeten Reglers sein. Bevorzugt sind das datenbasierte und das physikalische Modell Teil einer Vorsteuerung eines zum Ermitteln des Sollwerts des Ventilsteuerparameters verwendeten Reglers.

Der Zweck der Modellierung kann sehr vielfältig sein: Mit den gleichen Daten und mit der gleichen Modellstruktur kann sowohl das Vorwärtsverhalten, das bspw. für Diagnosefunktionen wichtig ist, als auch das Rückwärtsverhalten, das bspw. für eine Regelung der Arbeitseinheit wichtig ist, ab- bzw. nachgebildet werden.

Die Steuereinheit ist bevorzugt an der, insbesondere mobilen, Arbeitsmaschine angeordnet. Denkbar ist auch, dass die Steuereinheit abseits der Arbeitsmaschine angeordnet und bevorzugt mittels einer Drahtloskommunikationsverbindung mit der Arbeitsmaschine verbindbar oder verbunden ist.

Die erfindungsgemäßen Verfahren und die entsprechenden Steuereinheiten erhöhen die Sicherheit und Zuverlässigkeit beim automatisierten Betreiben eines hydraulischen Zylinders bzw. einer mittels des Hydraulikzylinders bewegbaren Arbeitseinheit einer, insbesondere mobilen, Arbeitsmaschine. Durch die Verwendung eines datenbasierten Modells kann ein Arbeitsprozess auch für eine Arbeitsmaschine (teil-) automatisiert werden, welche ein komplexes hydraulisches Verhalten aufweist und nur mit besonders hohem Aufwand durch ein hinreichend detailliertes physikalisches Modell vollständig beschrieben werden kann.

Gleichzeitig wird durch die Verwendung eines physikalischen Modells der Aufwand für das Trainieren des datenbasierten Modells insbesondere für Anwendungen mit großen Arbeitsbereichen bzw. großem Parameterraum reduziert. Insbesondere kann die Robustheit des Verfahrens in weniger häufig auftretenden Arbeitsbereichen bzw. Arbeitsbereichen, für welche weniger Trainingsdaten bereitgestellt sind, erhöht werden.

Vorteilhaft ist es, wenn im Schritt des Ermittelns des Sollwerts des Ventilsteuerparameters

- eine Ausgabegröße des physikalischen Modells in Abhängigkeit von dem Sollwert des Bewegungsparameters und

- der Sollwert des Ventilsteuerparameters in Abhängigkeit von der ermittelten Ausgabegröße unter Verwendung des datenbasierten Modells ermittelt wird. Das heißt, mit anderen Worten, eine unter Verwendung des physikalischen Modells in Abhängigkeit von dem Sollwert des Bewegungsparameters ermittelte Ausgabegröße wird als eine Eingabegröße für das datenbasierte Modell zum Ermitteln des Sollwerts des Ventilsteuerparameters bereitgestellt. Eine Eingabegröße für das physikalische Modell ist bevorzugt der Sollwert des Bewegungsparameters. Durch diese Ausgestaltung kann der Sollwert des Bewegungsparameters auch bei Berücksichtigung weiterer Einflussgrößen deterministisch in eine weitere physikalische Größe übergeführt werden, welche mittels des datenbasierten Modells auf den Sollwert des Ventilsteuerparameters abgebildet wird.

Vorteilhaft ist es auch, wenn als Ausgabegröße des physikalischen Modells ein Sollwert für einen Ventilparameter der Ventileinheit, insbesondere für eine Ventilöffnungsgröße oder für einen der Ventileinheit zugeordneten Volumenstrom, ermittelt wird. Der Ventilparameter kann ein geometrischer und/oder fluidischer Parameter eines Ventils der Ventileinheit sein. Hierbei kann das physikalische Modell beispielsweise eine Blendengleichung für einen druckabhängigen Volumenstrom einer Hydraulikflüssigkeit durch eine Blende eines Ventils der Ventileinheit umfassen. Durch diese Ausgestaltung können mit geringen Computerresourcen implementierbare physikalische Gesetzmäßigkeiten verwendet werden, um den Trainingsaufwand für das datenbasierte Modell zu reduzieren.

Vorteilhaft ist es außerdem, wenn im Schritt des Ermittelns des Sollwerts des Ventilsteuerparameters

- eine Ausgabegröße des datenbasierten Modells in Abhängigkeit von dem Sollwert des Bewegungsparameters und
- der Sollwert des Ventilsteuerparameters in Abhängigkeit von der ermittelten Ausgabegröße unter Verwendung des physikalischen Modells ermittelt wird. Vorteilhaft ist es hierbei, wenn als Ausgabegröße des datenbasierten Modells ein Sollwert für eine Ventilöffnungsgröße oder für einen der Ventileinheit zugeordneten Volumenstrom ermittelt wird. Das heißt, mit anderen Worten, eine unter Verwendung des datenbasierten Modells in Abhängigkeit von dem Sollwert des Bewegungsparameters ermittelte Ausgabegröße wird als eine Eingabegröße für das physikalische Modell zum Ermitteln des Sollwerts des Ventilsteuerparameters bereitgestellt. Eine Eingabegröße für das datenbasierte Modell ist bevorzugt der Sollwert des Bewegungsparameters. Durch diese Ausgestaltung kann der Sollwert des Bewegungsparameters in eine weitere physikalische Größe übergeführt werden, welche mittels des physikalischen Modells auch bei Berücksichtigung weiterer Einflussgrößen deterministisch auf den Sollwert des Ventilsteuerparameters abgebildet wird.

Vorteilhaft ist es darüber hinaus, wenn im Schritt des Ermittelns des Sollwerts des Ventilsteuerparameters

- unter Verwendung des physikalischen Modells ein erster Wert für eine Ausgabegröße,
- unter Verwendung des datenbasierten Modells ein zweiter Wert für dieselbe Ausgabegröße und
- der Sollwert des Ventilsteuerparameters basierend auf einem Vergleich des ersten und des zweiten Werts ermittelt wird. Die Ausgabegröße ist bevorzugt der Sollwert des Ventilsteuerparameters. Der zweite Wert kann hierbei durch einen vorgegebenen und/oder vorgebbaren Wertebereich limitiert werden. Insbesondere kann der zweite Wert auf einen Randwert des Wertebereichs festgesetzt werden, wenn der zweite Wert außerhalb des Wertebereichs liegt. Weiter kann das datenbasierte Modell ohne Eingabe bzw. Zuführen von Drücken oder Druckdifferenzen verwendet werden, sodass im Wesentlichen eine Korrektur von Fehlern im stationären Zylindermodell erfolgt. Durch diese Ausgestaltung kann eine Plausibilisierung der mittels eines White Box Modell bzw. eines Black Box Modells ermittelten Ausgabegröße erfolgen, wodurch der Sollwert des Ventilsteuerparameters mit höherer Zuverlässigkeit ermittelbar ist.

Vorteilhaft ist es zudem, wenn im Schritt des Ermittelns des Sollwerts des Ventilsteuerparameters

- unter Verwendung des physikalischen Modells und des datenbasierten Modells ein erster Wert für eine Ausgabegröße,
- unter Verwendung eines weiteren datenbasierten Modells ein zweiter Wert für dieselbe Ausgabegröße und
- der Sollwert des Ventilsteuerparameters basierend auf einem Vergleich des ersten und des zweiten Werts ermittelt wird. Die Ausgabegröße ist bevorzugt der Sollwert des Ventilsteuerparameters. Durch diese Ausgestaltung kann eine Plausibilisierung der mittels eines Grey Box Modell ermittelten Ausgabegröße erfolgen, wodurch der Sollwert des Ventilsteuerparameters mit höherer Zuverlässigkeit ermittelbar ist.

Vorteilhaft ist es insbesondere, wenn

- die Arbeitsmaschine zumindest einen weiteren hydraulischen Zylinder umfasst,
- im Schritt des Empfangens ein weiterer Sollwert für einen weiteren Bewegungsparameter des weiteren hydraulischen Zylinders mittels der Steuereinheit empfangen wird,
- im Schritt des Ermittelns ein weiterer Sollwert eines weiteren Ventilsteuerparameters einer weiteren dem weiteren hydraulischen Zylinder zugeordneten Ventileinheit in Abhängigkeit von dem empfangenen weiteren Sollwert unter Verwendung eines weiteren physikalischen Modells und eines weiteren datenbasierten Modells mittels der Steuereinheit ermittelt wird, wobei

  - unter Verwendung des physikalischen Modells und des datenbasierten Modells ein erster Wert für eine Ausgabegröße für den hydraulischen Zylinder ermittelt wird,
  - unter Verwendung des weiteren physikalischen Modells und des weiteren datenbasierten Modells ein weiterer erster Wert für eine weitere Ausgabegröße für den weiteren hydraulischen Zylinder ermittelt wird,
  - unter Verwendung eines zusätzlichen datenbasierten Modells je ein zweiter Wert für die Ausgabegröße des hydraulischen Zylinders und die weitere Ausgabegröße des weiteren hydraulischen Zylinders ermittelt wird, und
  - der jeweilige Sollwert der Ventilsteuerparameter basierend auf einem Vergleich des jeweils ersten und des jeweils zweiten Werts ermittelt wird, und

- im Schritt des Ausgebens das Signal in Abhängigkeit von den ermittelten Sollwerten der Ventilsteuerparameter ausgegeben wird, um die hydraulischen Zylinder zu betreiben.

Durch diese Ausgestaltung kann mittels eines einzelnen zusätzlichen datenbasierten Modells für die zumindest zwei hydraulischen Zylinder auch eine Wechselwirkung bzw. Korrelation zwischen den Zylindern berücksichtigt werden, was die Güte des Verfahrens erhöht.

Vorteilhaft ist es des Weiteren, wenn der Sollwert des Ventilsteuerparameters unter Verwendung eines Geschwindigkeitsreglers ermittelt wird, wobei der Geschwindigkeitsregler eine auf dem physikalischen Modell und dem datenbasierten Modell basierende Vorsteuerung umfasst. Durch diese Ausgestaltung kann das Verfahren eine Geschwindigkeitsregelung eines Hydraulikzylinders einer Arbeitsmaschine bereitstellen, die sich durch geringen Trainingsaufwand und gleichzeitig hoher Genauigkeit auch in nicht oder wenig trainierten Arbeitsbereichen auszeichnet.

Zeichnungen

Die Erfindung wird nachstehend anhand der beigefügten Zeichnungen beispielhaft näher erläutert. Es zeigen:

Fig. 1    eine schematische Darstellung einer Steuereinheit zum Betreiben einer Arbeitseinheit einer Arbeitsmaschine; und

Fig. 2    eine schematische Darstellung einer modellbasierten Vorsteuerung gemäß einer ersten Ausführungsform;

Fig. 3    eine schematische Darstellung einer modellbasierten Vorsteuerung gemäß einer zweiten Ausführungsform;

Fig. 4    eine zeitaufgelöste Darstellung eines Joysticksignals;

Fig. 5    ein Ablaufdiagramm eines Verfahrens zum Betreiben eines hydraulischen Zylinders einer Arbeitsmaschine; und

Fig. 6    ein Ablaufdiagramm eines Verfahrens zum Betreiben einer Arbeitseinheit einer Arbeitsmaschine.

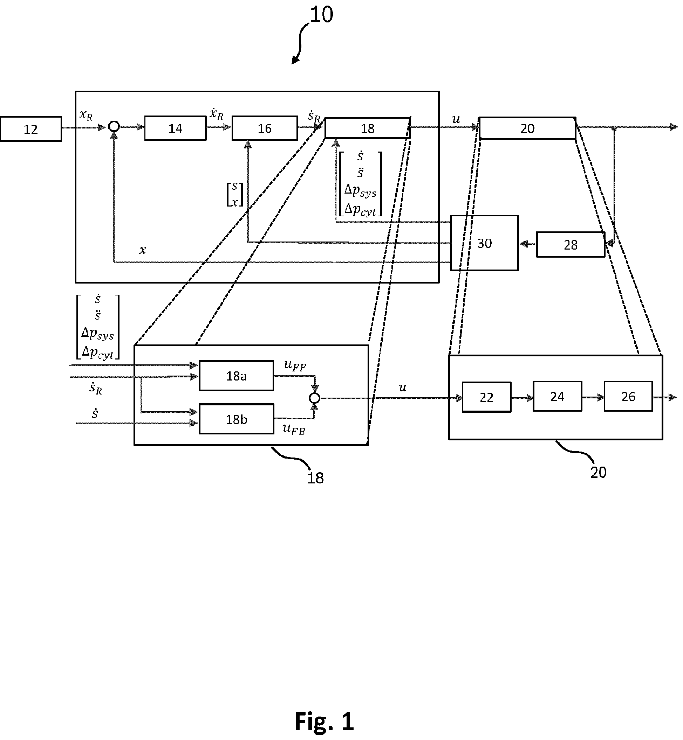

Fig. 1 zeigt eine schematische Darstellung einer Steuereinheit 10 zum Betreiben einer mittels eines hydraulischen Zylinders 26 betreibbaren Arbeitseinheit einer, insbesondere mobilen, Arbeitsmaschine. Die Arbeitsmaschine umfasst die Arbeitseinheit, den hydraulischen Zylinder 26, eine dem hydraulischen Zylinder 26 zugeordnete Ventileinheit 24 und die Steuereinheit 10. Hierbei wird die Arbeitseinheit mittels des hydraulischen Zylinders betrieben, insbesondere relativ zu einer Maschinenhaupteinheit der Arbeitsmaschine bewegt.

Die Arbeitsmaschine kann beispielsweise ein Bagger sein, der eine als einen Arbeitsarm ausgebildete Arbeitseinheit umfasst. Der Arbeitsarm weist einen Ausleger, einen Stiel und einen Löffel sowie einen Auslegerzylinder, einen Stielzylinder und einen Löffelzylinder auf. Jedem der Zylinder ist eine entsprechende Ventileinheit zum Bewegen des Zylinders zugeordnet.

Die Steuereinheit 10 ist eingerichtet, eine Sollposition $x_R$ der Arbeitseinheit zu empfangen. Hierbei kann die Sollposition $x_R$ ferner eine Angabe bezüglich einer räumlichen Orientierung der Arbeitseinheit umfassen. Zum Beispiel kann die Steuereinheit 10 eingerichtet sein, räumliche Soll-Koordinaten eines Tool Center Points (TCP) des Löffels des Baggers sowie ein Winkel des Löffels relativ zu einer vorgegebenen Bezugsrichtung zu empfangen.

Die Sollposition $x_R$ kann Teil einer Soll-Trajektorie der Arbeitseinheit sein. Denkbar ist, dass die Soll-Trajektorie von einem Bediener der Arbeitsmaschine und/oder mittels einer Recheneinheit 12 zur Generierung einer Soll-Trajektorie für die Arbeitsmaschine ermittelt und der Steuereinheit 10 bereitgestellt wird.

Bevorzugt wird die Sollposition $x_R$ der Arbeitseinheit einem Posen-Modul 14 der Steuereinheit 10 bereitgestellt. Das Posen-Modul 14 ist bevorzugt als Teil eines Kaskadenreglers ausgebildet und eingerichtet, die Sollposition $x_R$ der Arbeitseinheit und ferner die Istposition $x$ der Arbeitseinheit von einer die Istposition $x$ der Arbeitseinheit erfassenden Sensoreinheit 28 zu empfangen. Weiter ist das Posen-Modul 14 eingerichtet, basierend auf einer Abweichung von Sollposition $x_R$ und Istposition $x$ der Arbeitseinheit eine Sollgeschwindigkeit $\dot{x}_R$ der Arbeitseinheit zu ermitteln, mittels welcher die Istposition $x$ in die Sollposition $x_R$ übergeführt werden kann. Bspw. wird mittels des Posen-Moduls 14 die Sollposition $x_R$ des TCP und die Istposition $x$ des TCP empfangen und anhand der Abweichung eine Sollgeschwindigkeit des TCP $\dot{x}_R$ berechnet.

Die Steuereinheit 10 umfasst ein Inverse-Kinematik-Modul 16, das eingerichtet ist, basierend auf der Sollgeschwindigkeit $\dot{x}_R$ der Arbeitseinheit ein Sollwert $\dot{s}_R$ eines Bewegungsparameters des hydraulischen Zylinders ermittelt. Das Ermitteln des Sollwerts $\dot{s}_R$ des Bewegungsparameters erfolgt bevorzugt unter Berücksichtigung einer Kinematik der Arbeitseinheit der Arbeitsmaschine, insbesondere durch Lösen des inversen kinematischen Problems für die Arbeitsmaschine. Bspw. wird basierend auf der Sollgeschwindigkeit $\dot{x}_R$ des TCP des Baggers je eine Sollgeschwindigkeit $\dot{s}_R$ für den Auslegerzylinder, den Stielzylinder und den Löffelzylinder berechnet.

Die Steuereinheit 10 ist auch eingerichtet, mittels eines Geschwindigkeit-Moduls 18 einen Sollwert $u$ eines Ventilsteuerparameters des hydraulischen Zylinders 26 in Abhängigkeit von dem Sollwert $\dot{s}_R$ des Bewegungsparameters zu ermitteln.

Das Geschwindigkeits-Modul 18 ist bevorzugt als Geschwindigkeitsregler 18 ausgebildet und einge-

richtet, den Sollwert $\dot{s}_R$ des Bewegungsparameters und den Istwert $s_R$ des Bewegungsparameters des hydraulischen Zylinders zu empfangen. Weiter ist das Geschwindigkeits-Modul 18 eingerichtet, basierend auf einer Abweichung zwischen dem Sollwert $\dot{s}_R$ und dem Istwert $\dot{s}$ des Bewegungsparameters den Sollwert $u$ des Ventilsteuerparameters zu ermitteln.

Bevorzugt ist das Geschwindigkeitsmodul 18 eingerichtet, zusätzlich ein oder mehrere der folgenden Einflussgrößen beim Ermitteln des Sollwert $u$ des Ventilsteuerparameters zu berücksichtigen:

- Istwert $\ddot{s}$ einer Beschleunigung des hydraulischen Zylinders 26,
- Istwert eines Drucks an einer Zylinderstange des hydraulischen Zylinders 26,
- Istwert eines Drucks an einem Zylinderkopf des hydraulischen Zylinders 26,
- Differenz $\Delta p_{cyl}$ zwischen Istwert des Drucks an der Zylinderstange und Istwert des Drucks am Zylinderkopf 26,
- Istwert eines Lastdrucks der Arbeitseinheit,
- Istwert eines Pumpendrucks einer dem hydraulischen Zylinder 26 zugeordneten Pumpeneinheit zur Druckbeaufschlagung einer den hydraulischen Zylinder 26 bewegenden Hydraulikflüssigkeit,
- Differenz $\Delta p_{sys}$ zwischen Istwert des Lastdrucks und Istwert des Pumpendrucks,
- Istwert einer Temperatur der Umgebung und/oder eines Motorenöls in einem Ölkreislauf der Arbeitsmaschine.

Das Geschwindigkeitsmodul 18 umfasst bevorzugt einen PI-Regler mit einer modellbasierten Vorsteuerung 18a (feedforward control). Dadurch kann auch bei komplexem und nichtlinearem Verhalten der PI-Regler dahingehend entlastet werden, dass dessen Rückführung 18b (feedback control) nur Störungen und Modellfehler berücksichtigen muss.

Die modellbasierte Vorsteuerung 18a repräsentiert ein inverses Verhalten der Arbeitseinheit betreffend den Zusammenhang zwischen Bewegungsparameter des hydraulischen Zylinders 26 und Ventilsteuerparameter der jeweiligen Ventileinheit. Das heißt, mit anderen Worten, die modellbasierte Vorsteuerung 18a ermittelt einen Wert $u$ des Bewegungsparameters des hydraulischen Zylinders 26 basierend auf einem vorgegebenen Wert $\dot{s}_R$ des Ventilsteuerparameters. Hierbei erfolgt die modellbasierte Vorsteuerung 18a unter Verwendung eines physikalischen Modells und eines datenbasierten Modells.

Bevorzugt wird beim Ermitteln des Sollwerts $u$ des Ventilsteuerparameters des hydraulischen Zylinders 26 zusätzlich ein oder mehrere der oben genannten Einflussgrößen, bevorzugt, insbesondere eine Kombination von, $\dot{s}$ $\ddot{s}$, $\Delta p_{cyl}$, $\Delta p_{sys}$ berücksichtigt.

Für den Bagger mit Auslegerzylinder, Stielzylinder und Löffelzylinder umfasst die Steuereinheit 10 je ein

als PI-Regler ausgebildetes Geschwindigkeitsmodul 18 zum Ermitteln je eines Sollwerts $u$ des Ventilsteuerparameters für die dem jeweiligen Zylinder zugeordneten Ventileinheit. Hierbei umfasst jeder der PI-Regler jeweils eine eigene modellbasierte Vorsteuerung 18a.

Der Sollwert $u$ des Ventilsteuerparameters wird als Stellgröße des Geschwindigkeitsmoduls 18 ausgegeben. Hierbei ist der Sollwert $u$ des Ventilsteuerparameters insbesondere eine Summe von einer Ausgabegröße $u_{FB}$ der Rückführung 18a und einer Ausgabegröße $u_{FF}$ der modellbasierten Vorsteuerung 18b.

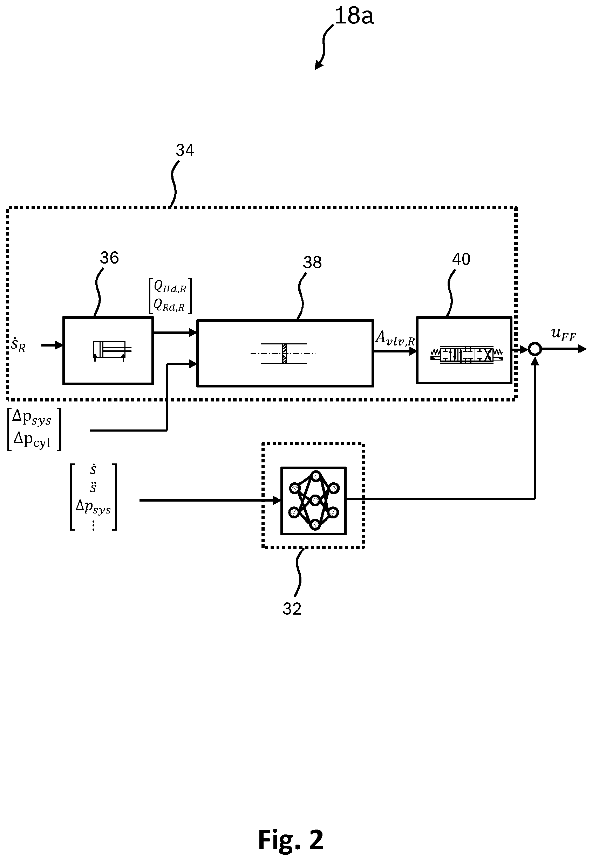

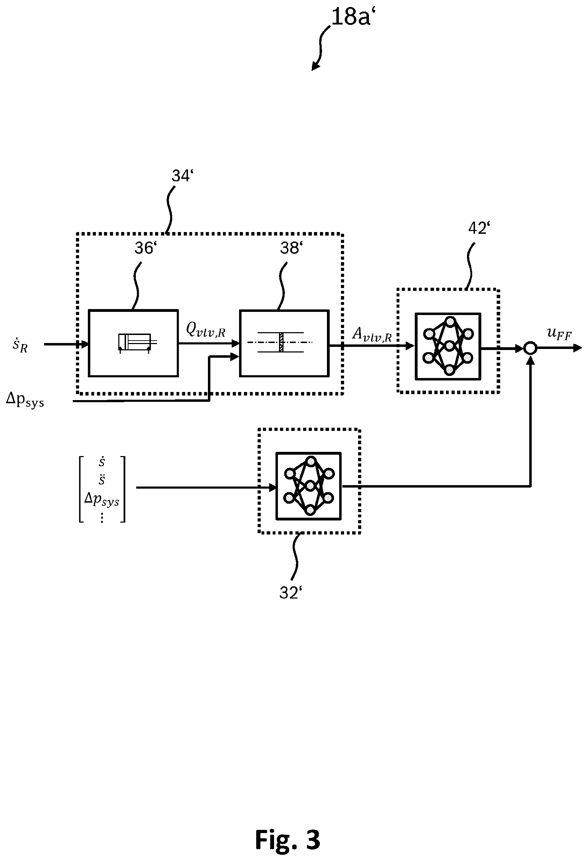

Die modellbasierte Vorsteuerung 18a basiert auf einem physikalischen Modell und einem datenbasierten Modell der Regelstrecke wie beispielhaft in Fig. 2 und Fig. 3 aufgezeigt. Das heißt, mit anderen Worten, der zu ermittelnde Sollwert $u$ des Ventilsteuerparameters wird basierend auf dem empfangenen Sollwert $\dot{s}_R$ des Geschwindigkeitsparameters des hydraulischen Zylinders 26 unter Verwendung des physikalischen Modells und des datenbasierten Modells ermittelt.

Die Steuereinheit 10 ist weiter eingerichtet, den ermittelten Sollwert $u$ des Ventilsteuerparameters an das System 20 auszugeben. Das System 20 umfasst ein Steuermodul 22, die Ventileinheit 24 und den hydraulischen Zylinder 26. Das System 20 repräsentiert eine Regelstrecke des Geschwindigkeitsreglers 18.

Das Steuermodul 22 ist eingerichtet, die Ventileinheit 24 basierend auf dem von der Steuereinheit 10 ausgegebenen Signal zu betreiben. Die Ventileinheit 24 ist ausgebildet, ansprechend auf das an das Steuermodul 22 ausgegebene Signal einen Durchfluss einer Hydraulikflüssigkeit durch die Ventileinheit 24 einzustellen, um den hydraulischen Zylinder 26 zu bewegen. Das heißt, mit anderen Worten, mittels Ausgebens des Signals an die Ventileinheit 24 in Abhängigkeit von dem ermittelten Sollwert $u$ des Ventilsteuerparameters wird der hydraulische Zylinder 26 betrieben und damit die Arbeitseinheit bewegt.

Ein oder mehrere der an der Arbeitsmaschine angeordneten Sensoren 28 sind ausgebildet, die Istposition $x$ der Arbeitseinheit, eine Istposition bzw. Iststellung $s$ des hydraulischen Zylinders 24, sowie bevorzugt die oben aufgeführten Einflussgrößen, insbesondere , $\dot{s}$ $\ddot{s}$, $\Delta p_{cyl}$, $\Delta p_{sys}$ zu messen. Hierbei sind den Sensoren 28 bevorzugt geeignete modellbasierte Filter 30 zugeordnet.

Die modellbasierten Filter 30 sind eingerichtet, die Istposition $x$ der Arbeitseinheit an das Posen-Modul 14 und an Inverse-Kinematik-Modul 16 auszugeben, die Istposition bzw. Iststellung $s$ des hydraulischen Zylinders 24 an das Inverse-Kinematik-Modul 16 auszugeben, sowie bevorzugt die oben aufgeführten Einflussgrößen, insbesondere , $\dot{s}$ $\ddot{s}$, $\Delta p_{cyl}$, $\Delta p_{sys}$ an das Geschwindigkeits-Modul auszugeben.

Fig. 2 zeigt eine Darstellung einer ersten beispielhaften Ausführungsform der modellbasierten Vorsteuerung 18a.

Die modellbasierte Vorsteuerung 18a repräsentiert ein inverses Modell der Regelstrecke. Das inverse Modell umfasst hierbei ein physikalisches Modell 34 und ein datenbasiertes Modell 32.

Das physikalische Modell 34 ist eingerichtet, dem Sollwert $\dot{s}_R$ des Bewegungsparameter des hydraulischen Zylinders einen Sollwert $u_{FF}$ des Ventilsteuerpararameters zuzuordnen. Hierzu umfasst das physikalische Modell 34 ein erstes Modul 36, das eingerichtet ist, basierend auf dem Sollwert $\dot{s}_R$ des Bewegungsparameters unter Berücksichtigung oder Vernachlässigung einer Druckaufbau-Dynamik innerhalb des hydraulischen Zylinders ein Sollwert $Q_{vlv,R}$ eines Volumenstroms einer Hydraulikflüssigkeit durch die dem hydraulischen Zylinder zugeordnete Ventileinheit zu ermitteln. Bspw. kann ein Sollwert $Q_{Hd,R}$ eines Volumenstroms der Hydraulikflüssigkeit am Kopf des hydraulischen Zylinders und ein Sollwert $Q_{Rd,R}$ eines Volumenstroms der Hydraulikflüssigkeit am der Zylinderstange des hydraulischen Zylinders berechnet werden. Das physikalische Modell 34 kann ein erstes Modul 36 umfassen, das eingerichtet ist, beim Ermitteln des Sollwerts $Q_{vlv,R}$ des Volumenstroms eine Druckaufbaudynamik des hydraulischen Zylinders zu berücksichtigen.

Wenn die Druckaufbau-Dynamik des hydraulischen Zylinders 36 vernachlässigt wird, ergibt sich eine stationäre Beziehung zwischen der Zylindergeschwindigkeit $\dot{s}_R$ und dem Volumenstrom $Q_{vlv,R}$, welche von einer Kolbenfläche des hydraulischen Zylinders 36 abhängt. In diesem Fall ist für das physikalische Modell 34 ein Bereitstellen von, insbesondere gemessenen, Zylinderdrücken nicht erforderlich.

Das physikalische Modell 34 umfasst ein zweites Modul 38, das eingerichtet ist, basierend auf dem ermittelten Sollwert $Q_{vlv,R}$ des Volumenstroms einen Sollwert $A_{vlv,R}$ einer Öffnungsfläche einer Blende der Ventileinheit zu ermitteln.

Bevorzugt ist das physikalische Modell 34 eingerichtet, beim Ermitteln des Sollwerts $A_{vlv,R}$ der Öffnungsfläche der Blende eine Druckdifferenz $\Delta p_{cyl}$ zwischen Istwert des Drucks an der Zylinderstange und Istwert des Drucks am Zylinderkopf und/oder eine Druckdifferenz $\Delta p_{sys}$ zwischen Istwert des Lastdrucks und Istwert des Pumpendrucks zu berücksichtigen. Alternativ kann das physikalische Modell 34 eingerichtet sein, beim Ermitteln des Sollwerts $A_{vlv,R}$ der Öffnungsfläche der Blende statt eines gemessenen einen vorgegebenen und/oder vorgebbaren Wert für die Druckdifferenz $\Delta p_{cyl}$ und/oder Druckdifferenz $\Delta p_{sys}$ zu berücksichtigen, bspw. wenn kein Drucksensor zur Verfügung steht.

Das physikalische Modell 34 umfasst ferner ein drittes Modul 40, das eingerichtet ist, basierend auf dem ermittelten Sollwert $A_{vlv,R}$ der Öffnungsfläche der Blende einen ersten Ausgabewert $u_{FF,1}$ für den Ventilsteuerparameter zu ermitteln. Das dritte Modul 40 des physikalischen Modells 34 kann eingerichtet sein, beim Ermitteln des ersten Ausgabewerts $u_{FF,1}$ für den Ventilsteuerparameter eine Ventildynamik der Ventileinheit zu berücksichtigen.

Das datenbasierte Modell 32 ist als künstliches neuronales Netz 32 ausgebildet und eingerichtet, dem Sollwert $\dot{s}_R$ des Bewegungsparameter des hydraulischen Zylinders einen zweiten Ausgabewert $u_{FF,2}$ für den Ventilsteuerparameter zuzuordnen.

Bevorzugt ist das datenbasierte Modell 32 eingerichtet, zusätzlich ein oder mehrere der folgenden Einflussgrößen zu beim Ermitteln des zweiten Ausgabewerts $u_{FF,2}$ für den Ventilsteuerparameter zu berücksichtigen:

- Sollwert $\ddot{s}_R$ und/oder Istwert $\ddot{s}$ einer Beschleunigung des hydraulischen Zylinders,
- Istwert eines Drucks an einer Zylinderstange des hydraulischen Zylinders,
- Istwert eines Drucks an einem Zylinderkopf des hydraulischen Zylinders,
- Differenz $\Delta p_{cyl}$ zwischen Istwert des Drucks an der Zylinderstange und Istwert des Drucks am Zylinderkopf,
- Istwert eines Lastdrucks der Arbeitseinheit,
- Istwert eines Pumpendrucks einer dem hydraulischen Zylinder zugeordneten Pumpeneinheit zur Druckbeaufschlagung einer den hydraulischen Zylinder bewegenden Hydraulikflüssigkeit,
- Differenz $\Delta p_{sys}$ zwischen Istwert des Lastdrucks und Istwert des Pumpendrucks
- Istwert einer Temperatur der Umgebung und/oder eines Motoröls in einem Ölkreislauf der Arbeitsmaschine.

Basierend auf dem von dem physikalischen Modell 34 ermittelten ersten Ausgabewert $u_{FF,1}$ und dem von dem datenbasierten Modell 32 ermittelten zweiten Ausgabewert $u_{FF,2}$ des Ventilsteuerparameters wird von der Vorsteuerung 18a der Sollwert $u_{FF}$ des Ventilsteuerparameters ausgegeben. Bevorzugt wird der Sollwert $u_{FF}$ des Ventilsteuerparameters als Summe des von dem physikalischen Modell 34 ermittelten ersten Ausgabewert $u_{FF,1}$ und dem von dem datenbasierten Modell 32 ermittelten zweiten Ausgabewert $u_{FF,2}$ des Ventilsteuerparameters ausgegeben.

Das datenbasierte Modell 32 kann durch ein Trainingsverfahren trainiert werden, bei welchem bspw. ein Root Mean Square Error bezogen auf die Differenz, gegeben in Residuenform als

$$0 = u_{FF} - u_{FF,1} - u_{FF,2}$$

ermittelt wird. Hierbei ist ein Wert des ersten Ausgabegröße $u_{FF,1}$ durch das physikalische Modell 34 vorgegeben, während der Wert der zweiten Ausgabegröße $u_{FF,2}$ über die Parameter des datenbasierten Modells 32 hinsichtlich einer Minimierung des obigen Root Mean Square Errors optimiert wird.

Die Stellgröße des Geschwindigkeitsreglers 18, nämlich der Sollwert u des Ventilsteuerparameters, wird basierend auf der Ausgangsgröße $u_{FF}$ der modellbasierten Vorsteuerung 18a angepasst.

Fig. 3 zeigt eine Darstellung einer zweiten beispielhaften Ausführungsform der modellbasierten Vorsteuerung 18a'.

Die modellbasierte Vorsteuerung 18a' gemäß Fig. 3 unterscheidet sich von der modellbasierten Vorsteuerung 18a gemäß Fig. 2 durch ein weiteres datenbasiertes Modell 42' und dadurch, dass das physikalische Modell als Ausgabegröße den Sollwert $A_{vlv,R}$ der Öffnungsfläche der Blende der Ventileinheit bereitstellt.

Das heißt, mit anderen Worten, das physikalische Modell 34' umfasst ein erstes Modul 36', das eingerichtet ist, basierend auf dem Sollwert $\dot{s}_R$ des Bewegungsparameters unter Berücksichtigung oder Vernachlässigung einer Druckaufbau-Dynamik innerhalb des hydraulischen Zylinders ein Sollwert $Q_{vlv,R}$ eines Volumenstroms einer Hydraulikflüssigkeit durch die dem hydraulischen Zylinder zugeordnete Ventileinheit zu ermitteln. Das physikalische Modell 34' umfasst ein zweites Modul 38', das eingerichtet ist, basierend auf dem ermittelten Sollwert $Q_{vlv,R}$ des Volumenstroms einen Sollwert $A_{vlv,R}$ einer Öffnungsfläche einer Blende der Ventileinheit zu ermitteln.

Das weitere datenbasierte Model 42' ist eingerichtet, basierend auf dem ermittelten Sollwert $A_{vlv,R}$ der Öffnungsfläche der Blende den Sollwert $u_{FF}$ des Ventilsteuerparameters zu ermitteln.

Basierend auf dem von dem physikalischen Modell 34' und dem weiteren datenbasierten Modell 42' ermittelten ersten Ausgabewert $u_{FF,1}$ und dem von dem datenbasierten Modell 32' ermittelten zweiten Ausgabewert $u_{FF,2}$ für den Ventilsteuerparameter wird von der Vorsteuerung 18a' ein Sollwert $u_{FF}$ des Ventilsteuerparameters ausgegeben. Bevorzugt wird der Sollwert $u_{FF}$ des Ventilsteuerparameters als Summe des von dem physikalischen Modell 34' und dem weiteren datenbasierten Modell 42' ermittelten ersten Ausgabewert $u_{FF,1}$ und dem von dem datenbasierten Modell 32' ermittelten zweiten Ausgabewert $u_{FF,2}$ des Ventilsteuerparameters ausgegeben.

Das datenbasierte Modell 32' und das weitere datenbasierte Modell 42' können hierbei durch ein paralleles Trainingsverfahren trainiert werden.

Die Stellgröße des Geschwindigkeitsreglers 18, nämlich der Sollwert u des Ventilsteuerparameters, wird basierend auf der Ausgangsgröße $u_{FF}$ der modellbasierten Vorsteuerung 18a' angepasst.

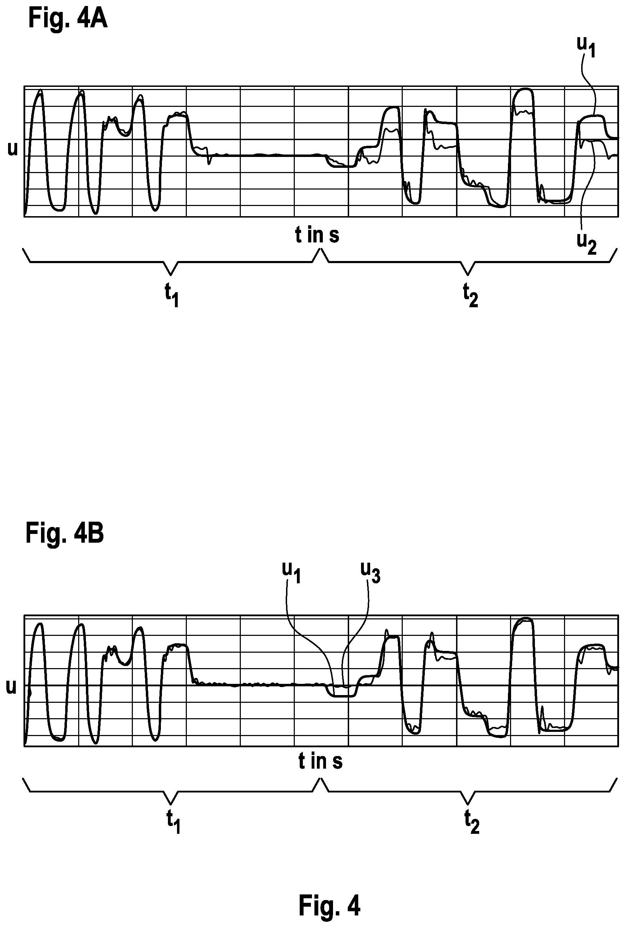

Fig. 4 zeigt eine zeitaufgelöste Darstellung eines real gemessenen Joysticksignals $u_1$ eines Baggers bei einem Abfahren einer TCP-Trajektorie für den Tool Center Point des Löffels im Vergleich mit einem unter Verwendung eines datenbasierten Modells (32; 32') (Fig. 4a) sowie unter Verwendung eines datenbasierten und eines physikalischen Modells (Fig. 4b) ermittelten Joysticksignal $u_2$, $u_3$ bei Vorgabe der real abgefahrenen Trajektorie.

Unter einem Joysticksignal u kann hierbei ein Ventilsteuerparameter u verstanden werden, denn das Joysticksignal u repräsentiert eine Position bzw. Stellung des Joysticks, welche einer entsprechenden Ansteuerung der Ventileinheiten von Ausleger-, Stiel- und Löffelzylinder des Baggers entspricht.

Die datenbasierten Modelle in Fig. 4a und Fig. 4b wurden mit demselben Datensatz von Trainingsdaten trainiert. Hierbei umfassen die Trainingsdaten TCP-Geschwindigkeiten und zugehörige Joystickpositionen für unterschiedliche Druckdifferenzen zwischen Zylinderstange und Zylinderkopf.

Ferner können die Trainingsdaten Werte für ein oder mehrere der folgenden Größen umfassen: Volumenfluss, Blendenöffnungsfläche, Ventilschieberposition, Zylinderposition, Zylinderdrücke sowie Ableitungen dieser Größen.

Beim Erzeugen der Trainingsdaten wurde der Bagger mit ungefülltem Löffel, d.h. ohne Last, betrieben. Beim Abfahren der TCP-Trajektorie war der Löffel in einem ersten Zeitintervall $t_1$ ungefüllt und in einem zweiten Zeitintervall $t_2$ gefüllt. Entsprechend unterscheidet sich die Druckdifferenz Istwert des Drucks an der Zylinderstange und Istwert des Drucks am Zylinderkopf im zweiten Zeitintervall $t_2$ signifikant vom ersten Zeitintervall $t_1$. Ebenso unterscheidet sich die Druckdifferenz zwischen Istwert des Lastdrucks und Istwert des Pumpendrucks im zweiten Zeitintervall $t_2$ signifikant vom ersten Zeitintervall $t_1$. Dadurch entstehen für den Einsatz eines datenbasierten Modells (32; 32') deutlich erschwerte Bedingungen.

In Gegenüberstellung von Fig. 4a und Fig. 4b werden Vorteile einer Verwendung eines datenbasierten Modells (32; 32') und eines physikalischen Modells bei einem Betreiben eines hydraulischen Zylinders aufgezeigt, insbesondere bei für das datenbasierte Modell ungünstigen Bedingungen.

Fig. 4a zeigt im ersten Zeitintervall $t_1$ eine deutlich höhere Übereinstimmung zwischen dem realen Joysticksignal $u_1$ und dem unter Verwendung eines datenbasierten Modells (32; 32') berechneten Joysticksignal $u_2$ als im zweiten Zeitintervall $t_2$, in welchem die Schaufel im Gegensatz zu den Trainingsdaten gefüllt war.

Fig. 4b zeigt im ersten Zeitintervall $t_1$ eine höhere Übereinstimmung zwischen dem realen Joysticksignal $u_1$ und dem unter Verwendung eines datenbasierten und eines physikalischen Modells berechneten Joysticksignal $u_3$ als im zweiten Zeitintervall $t_2$. Jedoch ist die Abweichung im zweiten Zeitintervall $t_2$ geringer im Vergleich zur Abweichung im zweiten Zeitintervall $t_2$ gemäß Fig. 4a, denn das physikalische Modell berücksichtigt den Einfluss der signifikant verschiedenen Druckdifferenz im beladenen Zustand des Löffels gegenüber dem unbeladenen Zustand des Löffels.

Die Abweichung zwischen realen Joysticksignal $u_1$ und dem unter Verwendung eines datenbasierten und eines physikalischen Modells berechneten Joysticksignal $u_3$ im ersten Zeitintervall $t_1$ ist vergleichbar mit der Abweichung im ersten Zeitintervall $t_1$ gemäß Fig. 4a.

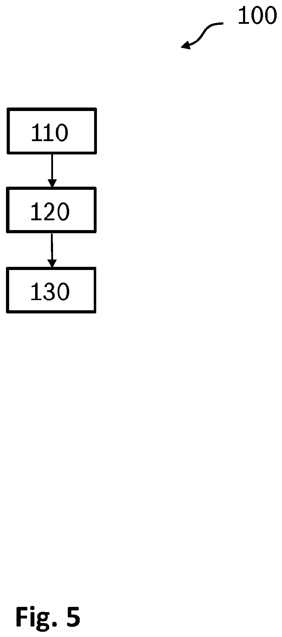

Fig. 5 zeigt ein Ablaufdiagramm eines Verfahrens zum Betreiben eines hydraulischen Zylinders einer, insbesondere mobilen, Arbeitsmaschine. Das Verfahren ist in seiner Gesamtheit mit dem Bezugszeichen 100 versehen.

In Schritt 110 wird ein Sollwert eines Bewegungsparameters des hydraulischen Zylinders mittels einer Steuereinheit empfangen.

In Schritt 120 wird ein Sollwert eines Ventilsteuerparameters einer dem hydraulischen Zylinder zugeordneten Ventileinheit in Abhängigkeit von dem empfangenen Sollwert des Bewegungsparameters unter Verwendung eines physikalischen Modells und eines datenbasierten Modells (32; 32') mittels der Steuereinheit ermittelt.

In Schritt 130 wird ein Signal in Abhängigkeit von dem ermittelten Sollwert des Ventilsteuerparameters mittels der Steuereinheit ausgegeben, um den hydraulischen Zylinder zu betreiben.

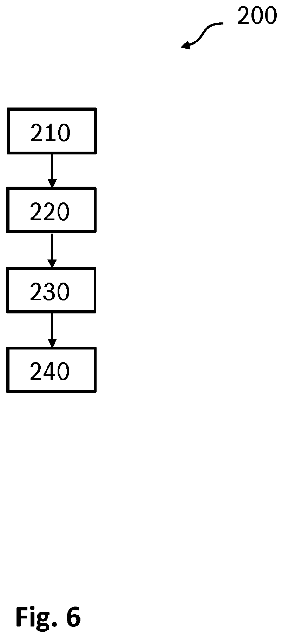

Fig. 6 zeigt ein Ablaufdiagramm eines Verfahrens zum Betreiben einer mittels eines hydraulischen Zylinders betreibbaren Arbeitseinheit, insbesondere eines Anbaugeräts, einer, insbesondere mobilen, Arbeitsmaschine. Das Verfahren ist in seiner Gesamtheit mit dem Bezugszeichen 200 versehen.

In Schritt 210 wird eine Sollposition der Arbeitseinheit, insbesondere des Anbaugeräts, mittels einer Steuereinheit empfangen.

In Schritt 220 wird ein Sollwert eines Bewegungsparameters des hydraulischen Zylinders in Abhängigkeit von der empfangenen Sollposition der Arbeitseinheit mittels der Steuereinheit ermittelt.

In Schritt 230 wird ein Sollwert eines Ventilsteuerparameters einer dem hydraulischen Zylinder zugeordneten Ventileinheit in Abhängigkeit von dem empfangenen Sollwert des Bewegungsparameters unter Verwendung eines physikalischen Modells und eines datenbasierten Modells (32; 32') mittels der Steuereinheit ermittelt.

In Schritt 240 wird ein Signal in Abhängigkeit von dem ermittelten Sollwert des Ventilsteuerparameters mittels der Steuereinheit ausgegeben, um mittels Betreiben des hydraulischen Zylinders die Arbeitseinheit, insbesondere das Anbaugerät, der, insbesondere mobilen, Arbeitsmaschine zu betreiben.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (100) zum Betreiben eines hydraulischen Zylinders (26) einer, insbesondere mobilen, Arbeitsmaschine, mit folgenden Schritten:

   - Empfangen (110) eines Sollwerts ($\dot{s}_R$) eines Bewegungsparameters des hydraulischen Zylinders (26) mittels einer Steuereinheit (10);
   - Ermitteln (120) eines Sollwerts (u) eines Ventilsteuerparameters einer dem hydraulischen Zylinder (26) zugeordneten Ventileinheit (24) in Abhängigkeit von dem empfangenen Sollwert ($\dot{s}_R$) des Bewegungsparameters unter Verwendung

       o eines physikalischen Modells (34; 34') und
       o eines datenbasierten Modells (32; 32', 42') mittels der Steuereinheit (10),

   wobei das datenbasierte Modell (32; 32', 42') und das physikalische Modell (34; 34') Teil einer Vorsteuerung eines zum Ermitteln des Sollwerts (u) des Ventilsteuerparameters verwendeten Reglers sind; und
   - Ausgeben (130) eines Signals in Abhängigkeit von dem ermittelten Sollwert (u) des Ventilsteuerparameters mittels der Steuereinheit (10), um den hydraulischen Zylinder (26) zu betreiben.

2. Verfahren (100) nach Anspruch 1, **dadurch gekennzeichnet, dass** im Schritt des Ermittelns (120) des Sollwerts (u) des Ventilsteuerparameters

   - eine Ausgabegröße ($A_{vlv,R}$) des physikalischen Modells (34; 34') in Abhängigkeit von dem Sollwert ($\dot{s}_R$) des Bewegungsparameters und
   - der Sollwert (u) des Ventilsteuerparameters in Abhängigkeit von der ermittelten Ausgabegröße ($A_{vlv,R}$) unter Verwendung des datenbasierten Modells (42')
   ermittelt wird.

3. Verfahren (100) nach Anspruch 2, **dadurch gekennzeichnet, dass** als Ausgabegröße ($A_{vlv,R}$; $Q_{vlv,R}$) des physikalischen Modells (34; 34') ein Sollwert für einen Ventilparameter ($A_{vlv,R}$; $Q_{vlv,R}$) der Ventileinheit (24), insbesondere für eine Ventilöffnungsgröße ($A_{vlv,R}$) oder für einen der Ventileinheit (24) zugeordneten Volumenstrom ($Q_{vlv,R}$), ermittelt wird.

4. Verfahren (100) nach Anspruch 1, **dadurch gekennzeichnet, dass** im Schritt des Ermittelns (120) des Sollwerts (u) des Ventilsteuerparameters

- eine Ausgabegröße des datenbasierten Modell in Abhängigkeit von dem Sollwert ($\dot{s}_R$) des Bewegungsparameters und
- der Sollwert ($\dot{s}_R$) des Ventilsteuerparameters in Abhängigkeit von der ermittelten Ausgabegröße unter Verwendung des physikalischen Modells ermittelt wird.

5. Verfahren (100) nach Anspruch 4, **dadurch gekennzeichnet, dass** als Ausgabegröße des datenbasierten Modells ein Sollwert für eine Ventilöffnungsgröße ($A_{vlv,R}$) oder für einen der Ventileinheit (24) zugeordneten Volumenstrom ($Q_{vlv,R}$) ermittelt wird.

6. Verfahren (100) nach Anspruch 1, **dadurch gekennzeichnet, dass** im Schritt des Ermittelns (120) des Sollwerts ($u$) des Ventilsteuerparameters

    - unter Verwendung des physikalischen Modells (34) ein erster Wert ($u_{FF,1}$) für eine Ausgabegröße,
    - unter Verwendung des datenbasierten Modells (32) ein zweiter Wert ($u_{FF,2}$) für dieselbe Ausgabegröße und
    - der Sollwert ($u$) des Ventilsteuerparameters basierend auf einem Vergleich des ersten und des zweiten Werts ($u_{FF,1}, u_{FF,2}$) ermittelt wird.

7. Verfahren (100) nach einem der vorherigen Ansprüche, **dadurch gekennzeichnet, dass** im Schritt des Ermittelns (120) des Sollwerts ($u$) des Ventilsteuerparameters

    - unter Verwendung des physikalischen Modells (34') und des datenbasierten Modells (42') ein erster Wert ($u_{FF,1}$) für eine Ausgabegröße,
    - unter Verwendung eines weiteren datenbasierten Modells (32') ein zweiter Wert ($u_{FF,2}$) für dieselbe Ausgabegröße und
    - der Sollwert ($u$) des Ventilsteuerparameters basierend auf einem Vergleich des ersten und des zweiten Werts ($u_{FF,1}, u_{FF,2}$) ermittelt wird.

8. Verfahren (100) nach einem der vorherigen Ansprüche **dadurch gekennzeichnet, dass**

    - die Arbeitsmaschine zumindest einen weiteren hydraulischen Zylinder (26) umfasst,
    - im Schritt des Empfangens (210a, 210b, 210c) ein weiterer Sollwert ($\dot{s}_R$) für einen weiteren Bewegungsparameter des weiteren hydraulischen Zylinders (26) mittels der Steuereinheit (10) empfangen wird,
    - im Schritt des Ermittelns (220a, 220b, 220c) ein weiterer Sollwert (u) eines weiteren Ventilsteuerparameters einer weiteren dem weiteren hydraulischen Zylinder (26) zugeordneten Ventileinheit (24) in Abhängigkeit von dem empfangenen weiteren Sollwert ($\dot{s}_R$) unter Verwendung eines weiteren physikalischen Modells (34; 34') und eines weiteren datenbasierten Modells (32; 32') mittels der Steuereinheit (10) ermittelt wird, wobei

    o unter Verwendung des physikalischen Modells (34; 34') und des datenbasierten Modells ein erster Wert ($u_{FF,1}$) für eine Ausgabegröße für den hydraulischen Zylinder (26) ermittelt wird,
    o unter Verwendung des weiteren physikalischen Modells (34; 34') und des weiteren datenbasiertes Modells ein weiterer erster Wert ($u_{FF,1}$) für eine weitere Ausgabegröße für den weiteren hydraulischen Zylinder (26) ermittelt wird,
    o unter Verwendung eines zusätzlichen datenbasierten Modells (32; 32') je ein zweiter Wert ($u_{FF,2}$) für die Ausgabegröße des hydraulischen Zylinders (26) und die weitere Ausgabegröße des weiteren hydraulischen Zylinders (26) ermittelt wird, und
    o der jeweilige Sollwert (u) der Ventilsteuerparameter basierend auf einem Vergleich des jeweils ersten und des jeweils zweiten Werts ($u_{FF,1}, u_{FF,2}$) ermittelt wird,

    und
    - im Schritt des Ausgebens (130) das Signal in Abhängigkeit von den ermittelten Sollwerten (u) der Ventilsteuerparameter ausgegeben wird, um die hydraulischen Zylinder (26) zu betreiben.

9. Verfahren (100) nach einem der vorherigen Ansprüche, **dadurch gekennzeichnet, dass** der Sollwert (u) des Ventilsteuerparameters unter Verwendung eines Geschwindigkeitsreglers (18) ermittelt wird, wobei der Geschwindigkeitsregler (18) eine auf dem physikalischen Modell (34; 34') und dem datenbasierten Modell (32; 32', 42') basierende Vorsteuerung umfasst.

10. Verfahren (200) zum Betreiben einer mittels eines hydraulischen Zylinders (26) betreibbaren Arbeitseinheit, insbesondere eines Anbaugeräts, einer, insbesondere mobilen, Arbeitsmaschine, mit folgenden Schritten:

    - Empfangen (210) einer Sollposition ($x_R$) der Arbeitseinheit, insbesondere des Anbaugeräts, mittels einer Steuereinheit (10);
    - Ermitteln (220) eines Sollwerts ($\dot{s}_R$) eines Bewegungsparameters des hydraulischen Zylinders (26) in Abhängigkeit von der empfangenen Sollposition der Arbeitseinheit mittels der Steuereinheit (10);

- Ermitteln (230) eines Sollwerts (u) eines Ventilsteuerparameters einer dem hydraulischen Zylinder (26) zugeordneten Ventileinheit (24) in Abhängigkeit von dem empfangenen Sollwert ($\dot{s}_R$) des Bewegungsparameters unter Verwendung eines physikalischen Modells (34; 34') und eines datenbasierten Modells (32; 32', 42') mittels der Steuereinheit (10), wobei das datenbasierte Modell (32; 32', 42') und das physikalische Modell (34; 34') Teil einer Vorsteuerung eines zum Ermitteln des Sollwerts (u) des Ventilsteuerparameters verwendeten Reglers sind; und

- Ausgeben (240) eines Signals in Abhängigkeit von dem ermittelten Sollwert (u) des Ventilsteuerparameters mittels der Steuereinheit (10), um mittels Betreiben des hydraulischen Zylinders (26) die Arbeitseinheit, insbesondere das Anbaugerät, der, insbesondere mobilen, Arbeitsmaschine zu betreiben.

11. Steuereinheit zum Betreiben eines hydraulischen Zylinders (26) einer, insbesondere mobilen, Arbeitsmaschine, wobei die Steuereinheit eingerichtet ist,

- einen Sollwert ($\dot{s}_R$) eines Bewegungsparameters des hydraulischen Zylinders (26) zu empfangen,
- einen Sollwert (u) eines Ventilsteuerparameters einer dem hydraulischen Zylinder (26) zugeordneten Ventileinheit (24) in Abhängigkeit von dem empfangenen Sollwert ($\dot{s}_R$) des Bewegungsparameters unter Verwendung eines physikalischen Modells (34; 34') und eines datenbasierten Modells (32; 32', 42') zu ermitteln, wobei das datenbasierte Modell (32; 32', 42') und das physikalische Modell (34; 34') Teil einer Vorsteuerung eines zum Ermitteln des Sollwerts (u) des Ventilsteuerparameters verwendeten Reglers sind, und
- ein Signal in Abhängigkeit von dem ermittelten Sollwert (u) des Ventilsteuerparameters auszugeben, um den hydraulischen Zylinder (26) zu betreiben.

12. Steuereinheit (10) zum Betreiben einer mittels eines hydraulischen Zylinders (26) betreibbaren Arbeitseinheit, insbesondere eines Anbaugeräts, einer, insbesondere mobilen, Arbeitsmaschine, wobei die Steuereinheit (10) eingerichtet ist,

- eine Sollposition ($x_R$) der Arbeitseinheit, insbesondere des Anbaugeräts, zu empfangen,
- einen Sollwert ($\dot{s}_R$) eines Bewegungsparameters des hydraulischen Zylinders (26) in Abhängigkeit von der empfangenen Sollposition der Arbeitseinheit zu ermitteln,
- einen Sollwert (u) eines Ventilsteuerparameters einer dem hydraulischen Zylinder (26) zugeordneten Ventileinheit (24) in Abhängigkeit von dem empfangenen Sollwert ($\dot{s}_R$) des Bewegungsparameters unter Verwendung eines physikalischen Modells (34; 34') und eines datenbasierten Modells (32; 32', 42') zu ermitteln, wobei das datenbasierte Modell (32; 32', 42') und das physikalische Modell (34; 34') Teil einer Vorsteuerung eines zum Ermitteln des Sollwerts (u) des Ventilsteuerparameters verwendeten Reglers sind, und
- ein Signal in Abhängigkeit von dem ermittelten Sollwert (u) des Ventilsteuerparameters auszugeben, um mittels Betreiben des hydraulischen Zylinders (26) die Arbeitseinheit, insbesondere das Anbaugerät, der, insbesondere mobilen, Arbeitsmaschine zu betreiben.

13. Arbeitsmaschine, insbesondere mobile Arbeitsmaschine, mit einer Arbeitseinheit, insbesondere einem Anbaugerät, mindestens einem hydraulischen Zylinder (26) zum Bewegen der Arbeitseinheit, insbesondere des Anbaugeräts, und einer Steuereinheit (10) zum Betreiben der Arbeitseinheit, insbesondere des Anbaugeräts, nach Anspruch 12.

14. Computerprogramm, umfassend Befehle, die bei der Ausführung durch einen Computer oder eine Steuereinheit (10) diesen bzw. diese veranlassen, das Verfahren (100) nach einem der Ansprüche 1 bis 9 oder das Verfahren (200) nach Anspruch 10 auszuführen und/oder zu steuern.

15. Computerlesbarer Datenträger, auf dem das Computerprogramm nach Anspruch 14 gespeichert ist.

**Claims**

1. Method (100) for operating a hydraulic cylinder (26) of an, in particular mobile, working machine, comprising the following steps:

- a target value ($\dot{s}_R$) of a movement parameter of the hydraulic cylinder (26) being received (110) by means of a control unit (10);
- a target value (u) of a valve control parameter of a valve unit (24) assigned to the hydraulic cylinder (26) being determined (120) depending on the received target value ($\dot{s}_R$) of the movement parameter using a physical model (34; 34') and a data-based model (32; 32', 42') by means of the control unit (10), wherein the data-based model (32; 32', 42') and the physical model (34; 34') are part of pilot control of a controller used for determining the target value (u) of the valve control parameter; and
- a signal being output (130) by means of the control unit (10) depending on the determined target value (u) of the valve control parameter in order to operate the hydraulic cylinder (26).

2. Method (100) according to Claim 1, **characterized in that**, in the step of determining (120) the target value (u) of the valve control parameter,

- an output variable ($A_{vlv,R}$) of the physical model (34; 34') is determined depending on the target value ($\dot{s}_R$) of the movement parameter, and
- the target value (u) of the valve control parameter is determined depending on the determined output variable ($A_{vlv,R}$) using the data-based model (42').

3. Method (100) according to Claim 2, **characterized in that** a target value for a valve parameter ($A_{vlv,R}$; $Q_{vlv,R}$) of the valve unit (24), in particular for a valve opening size ($A_{vlv,R}$) or for a volume flow rate ($Q_{vlv,R}$) assigned to the valve unit (24), is determined as the output variable ($A_{vlv,R}$, $Q_{vlv,R}$) of the physical model (34; 34').

4. Method (100) according to Claim 1, **characterized in that**, in the step of determining (120) the target value (u) of the valve control parameter,

- an output variable of the data-based model is determined depending on the target value ($\dot{s}_R$) of the movement parameter, and
- the target value ($\dot{s}_R$) of the valve control parameter is determined depending on the determined output variable using the physical model.

5. Method (100) according to Claim 4, **characterized in that** a target value for a valve opening size ($A_{vlv,R}$) or for a volume flow rate ($Q_{vlv,R}$) assigned to the valve unit (24) is determined as the output variable of the data-based model.

6. Method (100) according to Claim 1, **characterized in that**, in the step of determining (120) the target value (u) of the valve control parameter,

- a first value ($u_{FF,1}$) for an output variable is determined using the physical model (34),
- a second value ($u_{FF,2}$) for the same output variable is determined using the data-based model (32), and
- the target value (u) of the valve control parameter is determined based on a comparison of the first and the second value ($u_{FF,1}$, $u_{FF,2}$).

7. Method (100) according to any of the preceding claims, **characterized in that**, in the step of determining (120) the target value ($\mu$) of the valve control parameter,

- a first value ($u_{FF,1}$) for an output variable is determined using the physical model (34') and the data-based model (42'),
- a second value ($u_{FF,2}$) for the same output variable is determined using a further data-based model (32'), and
- the target value (u) of the valve control parameter is determined based on a comparison of the first and the second value ($u_{FF,1}$, $u_{FF,2}$).

8. Method (100) according to any of the preceding claims, **characterized in that**

- the working machine comprises at least one further hydraulic cylinder (26),
- a further target value ($\dot{s}_R$) for a further movement parameter of the further hydraulic cylinder (26) is received by means of the control unit (10) in the receiving step (210a, 210b, 210c),
- a further target value (u) of a further valve control parameter of a further valve unit (24) assigned to the further hydraulic cylinder (26) is determined by means of the control unit (10) depending on the received further target value ($\dot{s}_R$) using a further physical model (34; 34') and a further data-based model (32; 32') in the determining step (220a, 220b, 220c), wherein

    o a first value ($u_{FF,1}$) for an output variable for the hydraulic cylinder (26) is determined using the physical model (34; 34') and the data-based model,
    o a further first value ($u_{FF,1}$) for a further output variable for the further hydraulic cylinder (26) is determined using the further physical model (34; 34') and the further data-based model,
    o a respective second value ($u_{FF,2}$) for the output variable of the hydraulic cylinder (26) and the further output variable of the further hydraulic cylinder (26) is determined using an additional data-based model (32; 32'), and
    o the respective target value (u) of the valve control parameters is determined based on a comparison of the respectively first and the respectively second value ($u_{FF,1}$, $u_{FF,2}$),

and
- the signal is output depending on the determined target values (u) of the valve control parameters in the output step (130) in order to operate the hydraulic cylinders (26).

9. Method (100) according to any of the preceding claims, **characterized in that** the target value (u) of the valve control parameter is determined using a speed controller (18), wherein the speed controller (18) comprises pilot control based on the physical model (34; 34') and the data-based model (32; 32', 42').

10. Method (200) for operating a working unit operable by means of a hydraulic cylinder (26), in particular an attachment, of an, in particular mobile, working machine, comprising the following steps:

- a target position ($x_R$) of the working unit, in particular the attachment, being received (210) by means of a control unit (10);
- a target value ($\dot{s}_R$) of a movement parameter of the hydraulic cylinder (26) being determined (220) by means of the control unit (10) depending on the received target position of the working unit;
- a target value (u) of a valve control parameter of a valve unit (24) assigned to the hydraulic cylinder (26) being determined (230) by means of the control unit (10) depending on the received target value ($\dot{s}_R$) of the movement parameter using a physical model (34; 34') and a data-based model (32; 32', 42'), wherein the data-based model (32; 32', 42') and the physical model (34; 34') are part of pilot control of a controller used for determining the target value (u) of the valve control parameter; and
- a signal being output (240) by means of the control unit (10) depending on the determined target value (u) of the valve control parameter in order to operate the working unit, in particular the attachment, of the, in particular mobile, working machine by means of operating the hydraulic cylinder (26).

11. Control unit for operating a hydraulic cylinder (26) of an, in particular mobile, working machine, wherein the control unit is configured

- to receive a target value ($\dot{s}_R$) of a movement parameter of the hydraulic cylinder (26),
- to determine a target value (u) of a valve control parameter of a valve unit (24) assigned to the hydraulic cylinder (26) depending on the received target value ($\dot{s}_R$) of the movement parameter using a physical model (34; 34') and a data-based model (32; 32', 42'), wherein the data-based model (32; 32', 42') and the physical model (34; 34') are part of pilot control of a controller used for determining the target value (u) of the valve control parameter, and
- to output a signal depending on the determined target value (u) of the valve control parameter in order to operate the hydraulic cylinder (26).

12. Control unit (10) for operating a working unit operable by means of a hydraulic cylinder (26), in particular an attachment, of an, in particular mobile, working machine, wherein the control unit (10) is configured

- to receive a target position ($x_R$) of the working unit, in particular the attachment,
- to determine a target value ($\dot{s}_R$) of a movement parameter of the hydraulic cylinder (26) depending on the received target position of the working unit,
- to determine a target value (u) of a valve control parameter of a valve unit (24) assigned to the hydraulic cylinder (26) depending on the received target value ($\dot{s}_R$) of the movement parameter using a physical model (34; 34') and a data-based model (32; 32', 42'), wherein the data-based model (32; 32', 42') and the physical model (34; 34') are part of pilot control of a controller used for determining the target value (u) of the valve control parameter, and
- to output a signal depending on the determined target value (u) of the valve control parameter in order to operate the working unit, in particular the attachment, of the, in particular mobile, working machine by means of operating the hydraulic cylinder (26).

13. Working machine, in particular mobile working machine, comprising a working unit, in particular an attachment, at least one hydraulic cylinder (26) for moving the working unit, in particular the attachment, and a control unit (10) for operating the working unit, in particular the attachment, according to Claim 12.

14. Computer program comprising commands which, when executed by a computer or a control unit (10), cause the computer or control unit to execute and/or control the method (100) according to any of Claims 1 to 9 or the method (200) according to Claim 10.

15. Computer-readable data carrier on which the computer program according to Claim 14 is stored.

**Revendications**

1. Procédé (100) permettant de faire fonctionner un vérin hydraulique (26) d'une machine de travail, en particulier mobile, avec des étapes suivantes :

- réception (110) d'une valeur de consigne ($\dot{s}_R$) d'un paramètre de mouvement du vérin hydraulique (26) au moyen d'une unité de commande (10) ;
- détermination (120) d'une valeur de consigne (u) d'un paramètre de commande de soupape d'une unité de soupape (24) associée au vérin hydraulique (26) en fonction de la valeur de consigne ($\dot{s}_R$) reçue du paramètre de mouvement en utilisant un modèle physique (34 ; 34') et un modèle basé sur des données (32 ; 32', 42') au moyen de l'unité de commande (10), le modèle basé sur des données (32 ; 32', 42') et le modèle physique (34 ; 34') faisant partie d'une commande pilote d'un régulateur utilisé pour déterminer la valeur de consigne (u) du paramètre de commande de soupape ; et
- émission (130) d'un signal en fonction de la valeur de consigne (u) déterminée du paramètre de commande de soupape au moyen de l'unité de commande (10) pour faire fonctionner le vérin hydraulique (26).

2. Procédé (100) selon la revendication 1, **caractérisé en ce que** sont déterminées, dans l'étape de détermination (120) de la valeur de consigne (u) du paramètre de commande de soupape,

- une variable de sortie ($A_{vlv,R}$) du modèle physique (34 ; 34') en fonction de la valeur de consigne ($\dot{s}_R$) du paramètre de mouvement et
- la valeur de consigne (u) du paramètre de commande de soupape en fonction de la variable de sortie ($A_{vlv,R}$) déterminée en utilisant le modèle basé sur des données (42').

3. Procédé (100) selon la revendication 2, **caractérisé en ce qu'**est déterminée, comme variable de sortie ($A_{vlv,R}$, $Q_{vlv,R}$) du modèle physique (34 ; 34'), une valeur de consigne pour un paramètre de soupape ($A_{vlv,R}$; $Q_{vlv,R}$) de l'unité de soupape (24), en particulier pour une variable d'ouverture de soupape ($A_{vlv,R}$) ou pour un débit volumique ($Q_{vlv,R}$) associé à l'unité de soupape (24).

4. Procédé (100) selon la revendication 1, **caractérisé en ce que** sont déterminées, dans l'étape de détermination (120) de la valeur de consigne (u) du paramètre de commande de soupape,

- une variable de sortie du modèle basé sur les données en fonction de la valeur de consigne ($\dot{s}_R$) du paramètre de mouvement et
- la valeur de consigne ($\dot{s}_R$) du paramètre de commande de soupape en fonction de la variable de sortie déterminée en utilisant le modèle physique.

5. Procédé (100) selon la revendication 4, **caractérisé en ce qu'**est déterminée, en tant que variable de sortie du modèle basé sur des données, une valeur de consigne pour une variable d'ouverture de soupape ($A_{vlv,R}$) ou pour un débit volumique ($Q_{vlv,R}$) associé à l'unité de soupape (24).

6. Procédé (100) selon la revendication 1, **caractérisé en ce que** sont déterminées, dans l'étape de détermination (120) de la valeur de consigne (u) du paramètre de commande de soupape,

- une première valeur ($u_{FF,1}$) pour une variable de sortie en utilisant le modèle physique (34),
- une deuxième valeur ($u_{FF,2}$) pour la même variable de sortie en utilisant le modèle basé sur les données (32), et
- la valeur de consigne (u) du paramètre de commande de soupape sur la base d'une comparaison de la première et de la deuxième valeur ($u_{FF,1}$, $u_{FF,2}$).

7. Procédé (100) selon l'une des revendications précédentes, **caractérisé en ce que** sont déterminées, dans l'étape de détermination (120) de la valeur de consigne ($\mu$) du paramètre de commande de soupape,

- une première valeur ($u_{FF,1}$) pour une variable de sortie en utilisant le modèle physique (34') et le modèle basé sur les données (42'),
- une deuxième valeur ($u_{FF,2}$) pour la même variable de sortie en utilisant un autre modèle basé sur les données (32') et
- la valeur de consigne (u) du paramètre de commande de soupape sur la base d'une comparaison de la première et de la deuxième valeur ($u_{FF,1}$, $u_{FF,2}$).

8. Procédé (100) selon l'une des revendications précédentes, **caractérisé en ce que**

- la machine de travail comprend au moins un autre vérin hydraulique (26),
- dans l'étape de réception (210a, 210b, 210c), une autre valeur de consigne ($\dot{s}_R$) pour un autre paramètre de mouvement de l'autre vérin hydraulique (26) est reçue au moyen de l'unité de commande (10),
- dans l'étape de détermination (220a, 220b, 220c), une autre valeur de consigne (u) d'un autre paramètre de commande de soupape d'une autre unité de soupape (24) associée à l'autre cylindre hydraulique (26) est déterminée en fonction de l'autre valeur de consigne ($\dot{s}_R$) reçue en utilisant un autre modèle physique (34 ; 34') et un autre modèle basé sur des données (32 ; 32') au moyen de l'unité de commande (10),

o une première valeur ($u_{FF,1}$) pour une variable de sortie pour le vérin hydraulique (26) est déterminée en utilisant le modèle physique (34 ; 34') et le modèle basé sur des données,
o une autre première valeur ($u_{FF,1}$) pour une autre grandeur de sortie pour l'autre vérin hydraulique (26) est déterminée en utilisant l'autre modèle physique (34 ; 34') et l'autre modèle basé sur des données,

o une deuxième valeur (u$_{FF,2}$) pour la variable de sortie du vérin hydraulique (26) et l'autre variable de sortie de l'autre vérin hydraulique (26) sont déterminées respectivement en utilisant un modèle basé sur des données supplémentaire (32 ; 32'), et

o la valeur de consigne (u) respective des paramètres de commande de soupape est déterminée sur la base d'une comparaison de la première et de la deuxième valeur (u$_{FF,1}$, u$_{FF,2}$) respective,

et

- dans l'étape d'émission (130), le signal est émis en fonction des valeurs de consigne (u) déterminées des paramètres de commande de soupape pour faire fonctionner les vérins hydrauliques (26).

9.  Procédé (100) selon l'une des revendications précédentes, **caractérisé en ce que** la valeur de consigne (u) du paramètre de commande de soupape est déterminée en utilisant un régulateur de vitesse (18), le régulateur de vitesse (18) comprenant une commande pilote basée sur le modèle physique (34 ; 34') et le modèle basé sur des données (32 ; 32', 42').

10. Procédé (200) pour faire fonctionner une unité de travail, en particulier un équipement auxiliaire, d'une machine de travail, en particulier mobile, qui peut fonctionner au moyen d'un vérin hydraulique (26), avec des étapes suivantes :

    - réception (210) d'une position de consigne (x$_R$) de l'unité de travail, en particulier de l'équipement auxiliaire, au moyen d'une unité de commande (10) ;
    - détermination (220) d'une valeur de consigne (ṡ$_R$) d'un paramètre de mouvement du vérin hydraulique (26) en fonction de la position de consigne reçue de l'unité de travail au moyen de l'unité de commande (10) ;
    - détermination (230) d'une valeur de consigne (u) d'un paramètre de commande de soupape d'une unité de soupape (24) associée au vérin hydraulique (26) en fonction de la valeur de consigne (ṡ$_R$) reçue du paramètre de mouvement en utilisant un modèle physique (34 ; 34') et un modèle basé sur des données (32 ; 32', 42') au moyen de l'unité de commande (10), le modèle basé sur des données (32 ; 32', 42') et le modèle physique (34 ; 34') faisant partie d'une commande pilote d'un régulateur utilisé pour déterminer la valeur de consigne (u) du paramètre de commande de soupape ; et
- émission (240) d'un signal en fonction de la valeur de consigne (u) déterminée du paramètre de commande de soupape au moyen de l'unité de commande (10) pour faire fonctionner l'unité de travail, en particulier l'équipement auxiliaire, de la machine de travail, en particulier mobile, au moyen du fonctionnement du vérin hydraulique (26).

11. Unité de commande destinée à faire fonctionner un vérin hydraulique (26) d'une machine de travail, en particulier mobile, l'unité de commande étant mise au point pour

    - recevoir une valeur de consigne (ṡ$_R$) d'un paramètre de mouvement du vérin hydraulique (26),
    - déterminer une valeur de consigne (u) d'un paramètre de commande de soupape d'une unité de soupape (24) associée au vérin hydraulique (26) en fonction de la valeur de consigne (ṡ$_R$) reçue du paramètre de mouvement en utilisant un modèle physique (34 ; 34') et un modèle basé sur des données (32 ; 32', 42'), le modèle basé sur des données (32 ; 32', 42') et le modèle physique (34 ; 34') faisant partie d'une commande pilote d'un régulateur utilisé pour déterminer la valeur de consigne (u) du paramètre de commande de soupape, et
    - émettre un signal en fonction de la valeur de consigne (u) déterminée du paramètre de commande de soupape pour faire fonctionner le vérin hydraulique (26).

12. Unité de commande (10) destinée à faire fonctionner une unité de travail pouvant fonctionner au moyen d'un vérin hydraulique (26), en particulier un équipement auxiliaire, d'une machine de travail, en particulier mobile, l'unité de commande (10) étant mise au point pour

    - recevoir une position de consigne (x$_R$) de l'unité de travail, en particulier de l'équipement auxiliaire,
    - déterminer une valeur de consigne (ṡ$_R$) d'un paramètre de mouvement du vérin hydraulique (26) en fonction de la position de consigne reçue de l'unité de travail,
    - déterminer une valeur de consigne (u) d'un paramètre de commande de soupape d'une unité de soupape (24) associée au vérin hydraulique (26) en fonction de la valeur de consigne (ṡ$_R$) reçue du paramètre de mouvement en utilisant un modèle physique (34 ; 34') et un modèle basé sur des données (32 ; 32', 42'), le modèle basé sur des données (32 ; 32', 42') et le modèle physique (34 ; 34') faisant partie d'une commande pilote d'un régulateur utilisé pour déterminer la valeur de consigne (u) du paramètre de commande de soupape, et

- émettre un signal en fonction de la valeur de consigne (u) déterminée du paramètre de commande de soupape pour faire fonctionner l'unité de travail, en particulier l'équipement auxiliaire, de la machine de travail, en particulier mobile, au moyen du fonctionnement du vérin hydraulique (26).

13. Machine de travail, en particulier machine de travail mobile, avec une unité de travail, en particulier un équipement auxiliaire, au moins un vérin hydraulique (26) pour déplacer l'unité de travail, en particulier l'équipement auxiliaire, et une unité de commande (10) destinée à faire fonctionner l'unité de travail, en particulier l'équipement auxiliaire, selon la revendication 12.

14. Programme informatique comprenant des instructions qui, lorsqu'elles sont exécutées par un ordinateur ou une unité de commande (10), amènent celui-ci ou celle-ci à exécuter et/ou commander le procédé (100) selon l'une des revendications 1 à 9 ou le procédé (200) selon la revendication 10.

15. Support de données lisible par ordinateur, sur lequel est stocké le programme informatique selon la revendication 14.

**Fig. 1**

**Fig. 2**

**Fig. 3**

## Fig. 4A

## Fig. 4B

## Fig. 4

100

110

120

130

**Fig. 5**

200

```
┌─────────┐
│   210   │
└─────────┘
     │
     ▼
┌─────────┐
│   220   │
└─────────┘
     │
     ▼
┌─────────┐
│   230   │
└─────────┘
     │
     ▼
┌─────────┐
│   240   │
└─────────┘
```

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20200123927 A1
- US 20200097851 A1